# EUROPEAN PATENT SPECIFICATION

(11) **EP 0 971 834 B1**
(45) Date of publication and mention of the grant of the patent: **28.08.2002**
(21) Application number: 98913949.8
(22) Date of filing: 01.04.1998
(51) Int. Cl.: B60T 13/68, B60T 11/18

(54) **IMPROVEMENTS RELATING TO HYDRAULIC BRAKING SYSTEMS**
VERBESSERUNGEN IN BEZUG AUF HYDRAULISCHE BREMSANLAGEN
AMELIORATIONS DANS DES SYSTEMES DE FREINAGE HYDRAULIQUE

(30) Priority: 05.04.1997 GB 9706955
(43) Date of publication of application: 19.01.2000
(73) Proprietor: Lucas Industries Limited, West Midlands B90 4LA (GB)
(72) Inventor: UZZELL, Robert, George, Redditch, Worcestershire B98 0NY (GB)
(74) Representative: Spall, Christopher John
(86) International application number: GB9800957
(87) International publication number: WO98045151

(56) References cited:
- US-A- 4 425 005
- US-A- 5 603 217

## Description

This invention relates to improvements in hydraulic braking systems of the brake-by-wire type, in which under normal braking, the supply of hydraulic fluid to a wheel brake is controlled by an electrically operated actuator adapted to operate in response to an electrical signal from a pedal-operated transducer indicative of braking demand.

It is known in such a brake-by-wire system to provide a manual hydraulic back up which allows hydraulic fluid to be pushed through to the wheel brake in the event of an electrical failure. Typically, such a back-up comprises a pedal operated master cylinder connected to the brake via an isolator valve. During normal operation the isolator valve is closed so that the master cylinder and brake are isolated from each other, and hydraulic pressure is generated at the brake by the electrically operated actuator. In the event of a fault, the isolator valve is opened to connect the master cylinder to the brake to allow manual generation of hydraulic braking pressure to be applied to the brake.

In order to allow for adequate "pedal feel" it is also known in such a system to incorporate a compliance unit. The compliance unit, typically in the form of a piston working in a bore against a single biasing spring, is connected to the output of the master cylinder up-stream of the isolator valve. Operation of the brake pedal displaces hydraulic fluid from the master cylinder, which flows into the bore in the compliance unit. The fluid displaces the piston against the biasing spring until an equilibrium point is reached, i.e. where the force applied to the piston by the biasing spring balances the force applied to the piston by the brake fluid. Thus, by tailoring the characteristics of the compliance unit such as the spring force to mimic the compliance of a normal hydraulic braking system, it is possible to provide a realistic pedal force and displacement of the brake pedal during normal braking.

A problem with the use of such a compliance unit arises if there is a fault in the braking system. In this event, the isolator valve is opened to allow manual back-up, but the pedal travel required to operate the brake is excessive because of the combined compliance of the brake and the compliance unit. Nevertheless, this can be overcome to a limited extent by providing a second isolator valve between the compliance unit and the master cylinder which closes when manual back up is required.

A problem with the use of a second isolator valve arises when a fault is detected at a time when the compliance unit is at least partially full of brake fluid i.e. during or immediately after a brake application. In this event, the second isolator valve will effectively trap brake fluid in the compliance unit, leaving a reduced volume of fluid in the master cylinder circuit. This results in an undesirable increase in pedal travel during manual back-up, although it does reduce the overall compliance during back-up.

In accordance with a first aspect of the invention, we provide a compliance unit for use in an hydraulic braking system of the brake-by-wire type, said compliance unit being adapted to absorb hydraulic fluid expelled from a master cylinder during normal braking, and characterised by further comprising a first piston working in a bore adapted so that hydraulic fluid from the master cylinder entering the bore moves the piston along the bore in a first direction against a first and second biasing means, said first biasing means being adapted to apply a first biasing force to said first piston during normal braking and said second biasing means being adapted to apply a second biasing force to said first piston in the event that a fault in the braking system is detected to return at least a part of said hydraulic fluid to said master cylinder.

The compliance unit in accordance with the invention is advantageous in that it will automatically return hydraulic fluid absorbed during normal braking to the master cylinder in the event of a fault. This reduces the required pedal travel. In effect, the compliance unit automatically decreases its compliance in the event of a fault.

During normal operation, the first piston may therefore only be biased by a force substantially equal to the first biasing force. In the event of a fault, the biasing force applied to the piston may be increased by the amount of the second biasing force.

Preferably, the compliance unit is adapted so that in the event of a fault the combination of the first and second biasing forces applied to the first piston is at least equal to or greater than the maximum force that can be applied to the first piston by the fluid from the master cylinder. This is advantageous in that it ensures that substantially all the fluid is expelled from the compliance unit in the event of a failure.

The first biasing means may comprise a compression spring acting upon said first piston in a direction substantially opposed to the direction in which the force of the fluid from the master cylinder acts upon the piston. Such a spring is simple and reliable, as well as being easy to manufacture.

The bore may comprise a stepped bore having a first and second portion, said first portion being adapted to accommodate said first piston, and said second portion adapted to accommodate at least part of said second biasing means and being of larger diameter than said first portion.

The second biasing means may comprise a stepped piston having a first portion working in said first piston portion of said bore and a second piston portion of a larger diameter working in said second portion of said bore. The stepped piston may be adapted to move along said first bore in the event of a fault to interact with said first piston under the action of said second biasing force. Said second biasing force may be provided by a second spring having a spring force greater than said first spring force.

Normally, the second piston may be biased away from the first piston in the first portion of the bore under the action of a third biasing force. The third biasing force may comprise a hydraulic pressure generated in a cavity defined by a portion of the second piston and the stepped face of the bore. This hydraulic pressure acts to move the second piston against the force of the second spring (the second biasing force). Preferably, the third biasing force exceeds the second biasing force during normal brake operation, and is reduced to zero in the event of a fault.

The third biasing force is preferably generated by introducing hydraulic fluid, for example from a pump, into the cavity during normal braking. In the event of a fault, the hydraulic fluid can be pumped out, or allowed to be forced out under the action of the second spring moving the piston. This is advantageous in that it is a fail-safe arrangement which will work even in the event of electrical failure or loss of hydraulic pressure. A valve may be provided for alternatively connecting the cavity to a pressure source or pressure sink.

A throttle may be provided to limit the rate at which the fluid is expelled from the cavity. The throttle may comprise a restricted orifice in a line between the cavity and the reservoir.

A stop means may be provided in the second bore to limit the displacement of the second piston against the second spring.

The first biasing means may comprise a first spring adapted to act between an end face of the first piston and an end face of the second piston. This is advantageous in that it simplifies the required form of the stepped bore. Alternatively, it could be adapted to act upon the end face of the first piston and a fixed part of the bore.

According to a second aspect of the invention, we provide a hydraulic braking system incorporating a compliance unit in accordance with a first aspect of the invention, said hydraulic braking system comprising a master cylinder connected via an isolator valve to a wheel brake and a brake actuator being adapted to operate in response to an electrical signal from a pedal-operated transducer in turn to control the supply of hydraulic fluid to said wheel brake, said compliance unit being in permanent fluidic communication with an output of said master cylinder, and in which said isolator valve is closed during normal braking to isolate the master cylinder from the wheel brake, and in the event of a fault said isolator valve is opened to provide fluidic communication between the master cylinder and the wheel brake.

Preferably, said isolator valve comprises a normally open electrically operated valve. It may comprise a solenoid-operated valve.

The braking system incorporating one preferred arrangement of the compliance unit may operate as follows.

During normal operation of the braking system, hydraulic fluid is introduced under pressure into the cavity defined by the step in the bore and the step in the second piston.

This hydraulic fluid displaces the second piston away from the first portion of the bore against the second biasing force, effectively substantially cancelling out the second biasing force. The first piston is then free to move within the first portion of the bore against the first biasing force generated by the first spring. Fluid from the master cylinder can be absorbed into the first portion of the bore by displacing the first piston. This provides for adequate brake pedal feel by enabling pedal displacement and generating feedback force through the pedal. The master cylinder is isolated from the brakes at this stage.

In the event of a failure of the braking system or a fault, the master cylinder is connected to the brakes by opening an isolator valve between the master cylinder and the brakes. The pressure in the cavity is reduced at a rate limited by the throttle, which causes the resulting force acting across the stepped piston to cause the stepped piston to move towards the first portion of the bore. Because the second biasing force applied to the stepped piston exceeds the first biasing force, the first piston is moved to expel hydraulic fluid from the first portion of the bore, returning it to the master cylinder.

The combined force acting upon the first piston to expel the hydraulic fluid exceeds the maximum pressure that can be generated by the master cylinder, and so the piston can no longer be moved along the bore by the hydraulic fluid in this mode.

This ensures that brake pedal travel is reduced and that no fluid is lost to the compliance unit during manual braking.

There will now be described, by way of example only, an embodiment of the present invention with reference to the accompanying drawings in which:
**Figure 1** is a view of the braking system incorporating a compliance unit in accordance with a first aspect of the present invention during normal electronically controlled braking; and

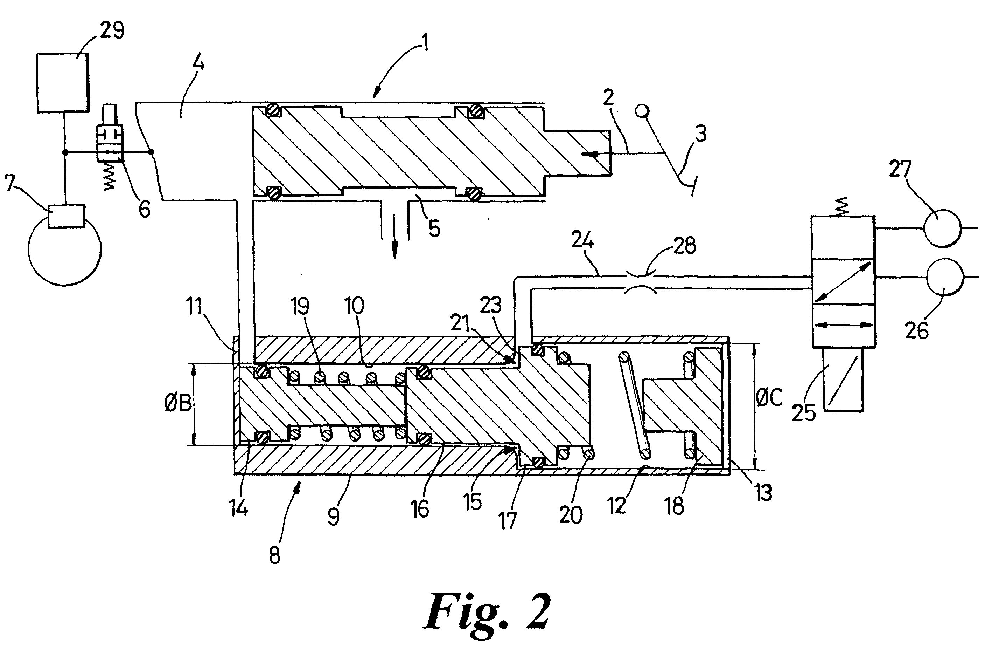

**Figure 2** is a view similar to that shown in Figure 1 in which the manual back-up mode has been activated.

The braking system illustrated in the Figures comprises a tandem master cylinder 1 operated via a plunger 2 connected to a brake pedal 3. The master cylinder 1 is connected to two brake circuits which work in tandem, although only a single circuit is illustrated and described herein.

One chamber 4 of the master cylinder 1 (the second chamber 5 is connected to a master cylinder reservoir connection not shown) is connected to a normally opened isolator valve 6 and thereafter to one or more electrically operated brake assemblies of the kind which an electrical signal from a pedal operated transducer is adapted to operate an electrically controlled actuator in turn to control the hydraulic pressure at a wheel brake 7. Because the isolator valve 6 is of the normally open kind, in the event of a failure the master cylinder 1 will be connected to the brake. An electrically controlled actuator 29 is connected to the brake 7 between the wheel brake and the isolator valve 6 (i.e. downstream from the isolator valve 6).

The output of the first chamber 4 of the master cylinder 1 is also connected to a compliance unit 8 upstream of the isolator valve 6. The compliance unit comprises a housing defining a stepped bore. A first portion 10 of the stepped bore has a first diameter φB and is connected to the master cylinder 1 adjacent its closed end 11. A second portion 12 of the stepped bore is of a larger diameter φC than said first portion 10 and has a second closed end 13.

A first piston 14 is adapted to work within the first portion 10 of the stepped bore. A seal is provided between the piston and the wall of the first bore. A second piston 15 is provided which has a stepped outline defining a first piston part 16 and a second piston part 17. The first piston part 16 works within the first portion 10 of the stepped bore, and is provided with a seal between the over wall of the piston 16 and the wall of the first bore 10. The second piston part 17 works within the second portion 12 of the stepped bore and a seal is provided between the part 17 and the second bore 12. An end stop 18 is provided at the end 13 of the second portion 12 of the bore to limit movement of the second stepped piston 15 away from the first portion 10 of the bore.

The first piston 14 is connected to the second piston 15 by a first spring 19 adapted to generate a first biasing force. The second piston 15 is also biased towards the first piston 14 by a second spring 20 acting upon the end stop 18 in the second bore 12. The spring force of the second spring 20 is chosen to be greater than the spring force of the first spring 19.

A cavity 21 is defined by the stepped face 22 of the stepped bore and the stepped face 23 of the second piston 15. The cavity 21 is connected via an hydraulic line 24 to a valve assembly 25 and thereafter to either a source of hydraulic fluid 16 or a reservoir 27. Depending on the operation of the valve assembly, hydraulic fluid can be either pumped into or drawn from the cavity 21. A throttle 28 is provided between the cavity 21 and the valve assembly 25 to limit the rate of change of volume of fluid in the cavity 21.

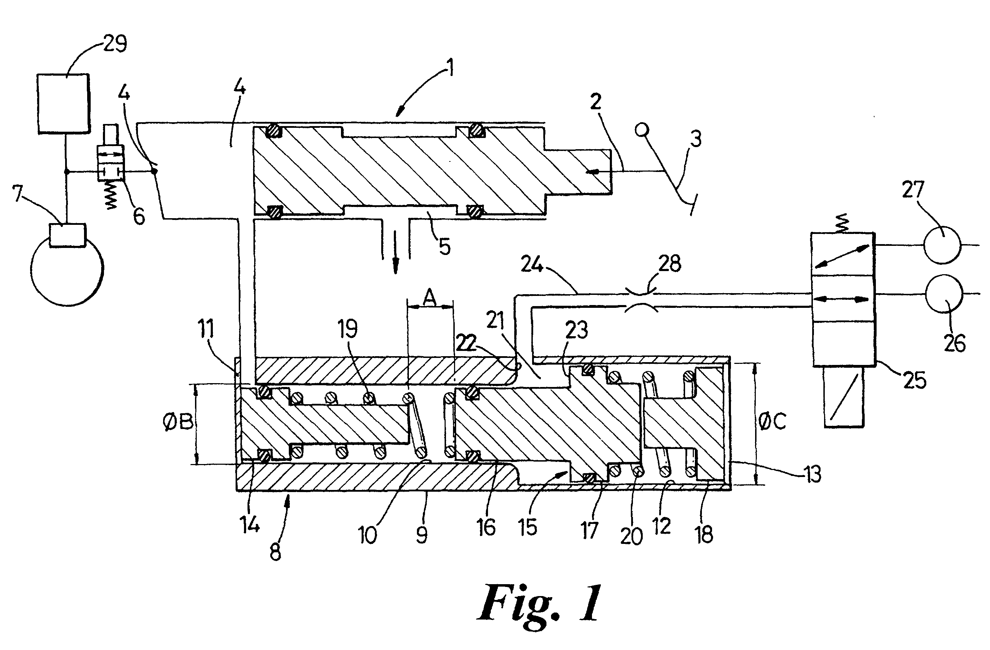

Figure 1 shows the braking system during normal braking operation. As shown, the isolator valve 6 is closed to isolate the chamber 4 of the master cylinder 1 from the brake assembly 7. The valve assembly 25 is operated so that pressurised fluid is applied to the cavity 21. This pressurised fluid acts upon the stepped face 23 of the second piston 15 to bias the second piston 15 against the spring force of the second spring 20 into contact with the end stop 18. The valve assembly 25 is adapted so that if it faults the cavity is connected to the reservoir 27.

When the brakes are not applied (i.e. the brake pedal 3 is in its inoperative position), as shown in Figure 1, the first piston 14 is biased towards the closed end 11 of the first bore 10 under the force of the first spring 19. On application of the brakes, by depressing the brake pedal 3, fluid from the master cylinder 1, which is prevented from reaching the wheel brake 7 due to the closed isolator valve 6, can be absorbed by the compliance unit 8 into the first bore 10, thereafter displacing the piston 14 against the spring force of the first spring 19. The maximum volume of fluid which can be absorbed depends on the bore cross-sectional area φB and the spacing A between the first 14 and second pistons 15.

In the event that a fault is detected, or if an electrical failure occurs, the isolator valve 6 is opened to connect the master cylinder 1 to the wheel brake 7 and the valve assembly 25 will operate to connect the cavity 21 to the reservoir 26. The pressurised fluid in the cavity 21 is then exhausted via the throttle 28, which allows the second spring 20 to act upon the second piston 15 to displace it towards the first piston 14 in the first portion 10 of the bore because the force of the second spring 20 exceeds the first spring force.

The combined spring forces acting upon the first piston 14 are chosen so as to support a desired maximum braking pressure and therefore minimum achievable vehicle deceleration that can be applied by the master cylinder 1 by the driver, and so any fluid absorbed by the compliance unit 8 is returned to the master cylinder 1. This minimises pedal travel required during back-up operation of the wheel brake 7.

The throttle 28 prevents sudden movement of the second piston (and thereafter the first piston) which could cause a pressure spike to be developed in the master cylinder 1. This helps to ensure a smooth transition from normal to manual back-up braking, preventing possible loss of control due to driver error.

## Claims

1. A compliance unit (8) for use in an hydraulic braking system of the brake-by-wire type, said compliance unit (8) being adapted to absorb hydraulic fluid expelled from a master cylinder (1) during normal braking, and **characterised by** further comprising a first piston (14) working in a bore adapted so that hydraulic fluid from the master cylinder entering the bore moves the piston (14) along the bore in a first direction against a first and second biasing means, said first biasing means (19) being adapted to apply a first biasing force to said first piston (14) during normal braking and said second biasing means being adapted to apply a second biasing force to said first piston (14) in the event that a fault in the braking system is detected to return at least a part of said hydraulic fluid to said master cylinder (1).

2. A compliance unit according to claim 1, **characterised in that** the first piston (14) is biased by a force substantially equal to the first biasing force during normal operation and in the event of a fault, the biasing force applied to the first piston (14) is increased by the amount of the second biasing force.

3. A compliance unit according to claim 1 or claim 2, **characterised in that** in the event of a fault the combination of the first and second biasing forces applied to the first piston (14) is at least equal to or greater than the maximum force that is applied to the first piston (14) by the fluid from the master cylinder.

4. A compliance unit according to claim 3, **characterised in that** the first biasing means (19) comprises a compression spring (19) acting upon said first piston (14) in a direction substantially opposed to the direction in which the force of the fluid from the master cylinder (1) acts upon the piston (14).

5. A compliance unit according to any preceding claim, **characterised in that** the bore comprises a stepped bore having a first and second portion (10, 12), said first portion (10) being adapted to accommodate said first piston (14), and said second portion (12) adapted to accommodate at least part of said second biasing means and being of larger diameter than said first portion.

6. A compliance unit according to claim 5, **characterised in that** the second biasing means comprises a stepped piston (15) having a first piston portion (16) working in said first portion (10) of said bore and a second piston portion (17) of a larger diameter working in said second portion (10) of said bore.

7. A compliance unit according to claim 6, **characterised in that** the stepped piston (15) is adapted to move along said first bore portion in the event of a fault to interact with said first piston (10) under the action of said second biasing force.

8. A compliance unit according to claim 7, **characterised in that** said second biasing force is provided by a second spring (20) having a spring force greater than said first biasing force.

9. A compliance unit according to claim 7 or 8, **characterised in that**, during normal operation the stepped piston (15) is biased away from the first piston in the first portion of the bore under the action of a third biasing force.

10. A compliance unit according to claim 9, **characterised in that** the third biasing force comprises a hydraulic pressure generated in a cavity (21) defined by a portion of the second piston (15) and the stepped face of the bore which acts to move the second piston (15) against the force of the second biasing force.

11. A compliance unit according to claim 9 or claim 10, **characterised in that** the third biasing force exceeds the second biasing force during normal brake operation, and is reduced substantially to zero in the event of a fault.

12. A compliance unit according to any one of claims 10 or 11, **characterised in that** the third biasing force is generated by introducing hydraulic fluid into the cavity (21) during normal braking and in the event of a fault, the hydraulic fluid is pumped out or forced out under the action of the second spring (20) moving the piston.

13. A compliance unit according to any one of claims 10 to 12, **characterised in that** a valve (25) is provided for alternatively connecting the cavity to a pressure source and a pressure sink.

14. An hydraulic braking system incorporating a compliance unit (8) in accordance with any one of claims 1 to 13, said hydraulic braking system comprising a master cylinder (1) connected via an isolator valve (6) to a wheel brake (7), a brake actuator adapted to operate in response to an electrical signal from a pedal-operated transducer in turn to control the supply of hydraulic fluid to said wheel brake, in which the compliance unit is in permanent fluidic communication with an output of said master cylinder (1), and in which said isolator valve (6) is closed during normal braking to isolate the master cylinder (1) from the wheel brake (7), and in the event of a fault said isolator valve (6) is opened to provide fluidic communication between the master cylinder (1) and the wheel brake (7).

15. An hydraulic braking system according to claim 14, **characterised in that** said isolator valve (6) comprises a normally open electrically operated valve.

## Patentansprüche

1. Federsimulatoreinheit (8) zur Verwendung in einem hydraulischen Bremssystem des Typs mit elektronischer Bremsung ("Brake By Wire"), wobei die Federsimulatoreinheit (8) ausgelegt ist, Hydraulikflüssigkeit aufzunehmen, die bei einer normalen Bremsung aus einem Hauptzylinder (1) abgegeben wird, **dadurch gekennzeichnet, dass** weiterhin ein erster Kolben (14) vorgesehen ist, der in einer Bohrung wirksam ist, die so ausgelegt ist, dass in die Bohrung eintretende Hydraulikflüssigkeit aus dem Hauptzylinder den Kolben (14) in der Bohrung in einer ersten Richtung gegen eine erste und eine zweite Vorspanneinrichtung bewegt, wobei die erste Vorspanneinrichtung (19) so ausgelegt ist, dass sie eine erste Vorspannkraft auf den ersten Kolben (14) während einer Normalbremsung ausübt, und die zweite Vorspanneinrichtung so ausgelegt ist, dass sie im Falle, dass ein Fehler im Bremssystem ermittelt wird, eine zweite Vorspannkraft auf den ersten Kolben (14) ausübt, um zumindest einen Teil der genannten Hydraulikflüssigkeit in den Hauptzylinder (1) zurückzuführen.

2. Federsimulatoreinheit gemäß Anspruch 1, **dadurch gekennzeichnet, dass** der erste Kolben (14) durch eine Kraft vorgespannt ist, die bei Normalbetätigung der Bremse im Wesentlichen der ersten Vorspannkraft entspricht, während bei Auftreten eines Fehlers die auf den ersten Kolben (14) ausgeübt Vorspannkraft um den Betrag der zweiten Vorspannkraft vergrößert wird.

3. Federsimulatoreinheit nach einem der Ansprüche 1 oder 2, **dadurch gekennzeichnet, dass** bei Auftreten eines Fehlers die Kombination der ersten und zweiten Vorspannkräfte, die an den ersten Kolben (14) angelegt wird, zumindest gleich oder größer ist als die Maximalkraft, die durch das Fluid aus dem Hauptzylinder auf den ersten Kolben (14) ausgeübt wird.

4. Federsimulatoreinheit nach Anspruch 3, **dadurch gekennzeichnet, dass** die erste Vorspanneinrichtung (19) eine Kompressionsfeder (19) aufweist, die auf den genannten ersten Kolben (14) in einer Richtung einwirkt, die im Wesentlichen entgegengesetzt ist zu der Richtung, in welcher die Kraft des Fluids aus dem Hauptzylinder (1) auf den Kolben (14) wirkt.

5. Federsimulatoreinheit gemäß einem der vorhergehenden Ansprüche, **dadurch gekennzeichnet, dass** die Bohrung eine Stufung aufweist mit ersten und zweiten Abschnitten (10, 12), wobei der erste Abschnitt (10) ausgelegt ist, um den ersten Kolben (14) aufzunehmen und der zweite Abschnitt (12) ausgelegt ist, um zumindest einen Teil der genannten zweiten Vorspanneinrichtung aufzunehmen und wobei weiterhin dieser zweite Abschnitt im Durchmesser größer ist als der erste Abschnitt.

6. Federsimulatoreinheit gemäß Anspruch 5, **dadurch gekennzeichnet, dass** die zweite Vorspanneinrichtung einen Kolben (15) mit einer Stufung aufweist, mit einem ersten Kolbenabschnitt (16), der im genannten ersten Abschnitt (10) der Bohrung angeordnet ist, und einen zweiten Kolbenabschnitt (17) größeren Durchmessers, der im genannten zweiten Abschnitt (10) der Bohrung angeordnet ist.

7. Federsimulatoreinheit gemäß Anspruch 6, **dadurch gekennzeichnet, dass** der gestufte Kolben (15) so ausgelegt ist, dass er bei Auftreten eines Fehlers sich in dem genannten ersten Bohrungsabschnitt bewegt, um unter Wirkung der genannten zweiten Vorspannkraft mit dem genannten ersten Kolben (10) in Eingriff zu kommen.

8. Federsimulatoreinheit gemäß Anspruch 7, **dadurch gekennzeichnet, dass** die genannte zweite Vorspannkraft durch eine zweite Feder (20) bereitgestellt wird, die eine Federkraft aufweist, die größer ist als die genannte erste Vorspannkraft.

9. Federsimulatoreinheit gemäß einem der Ansprüche 7 oder 8, **dadurch gekennzeichnet, dass** bei Normalbetrieb der gestufte Kolben (15) von dem ersten Kolben im ersten Abschnitt der Bohrung unter Wirkung einer dritten Vorspannkraft weggedrückt wird.

10. Federsimulatoreinheit gemäß Anspruch 9, **dadurch gekennzeichnet, dass** die dritte Vorspannkraft mit einem Hydraulikdruck zusammenhängt, der in einem Hohlraum (21) erzeugt wird, welcher durch einen Abschnitt des zweiten Kolbens (15) und der Stufe der Bohrung begrenzt wird, wobei der Druck so wirkt, dass der zweite Kolben (15) gegen die Kraft der zweiten Vorspannkraft bewegt wird.

11. Federsimulatoreinheit gemäß einem der Ansprüche 9 oder 10, **dadurch gekennzeichnet, dass** die dritte Vorspannkraft die zweite Vorspankraft bei Normalbremsung überschreitet und bei Auftreten eines Fehlers im Wesentlichen auf Null reduziert wird.

12. Federsimulatoreinheit gemäß einem der Ansprüche 10 oder 11, **dadurch gekennzeichnet, dass** die dritte Vorspannkraft erzeugt wird durch Einführen von Hydraulikflüssigkeit in den Hohlraum (21) bei einer Normalbremsung, während bei Auftreten eines Fehlers die Hydraulikflüssigkeit herausgepumpt oder herausgedrückt wird unter Wirkung der zweiten Feder (20), die den Kolben bewegt.

13. Federsimulatoreinheit gemäß einem der Ansprüche 10 bis 12, **dadurch gekennzeichnet, dass** ein Ventil (25) vorgesehen ist, um abwechselnd den Hohlraum mit einer Druckquelle oder einer Drucksenke zu verbinden.

14. Hydraulisches Bremssystem mit einer Federsimulatoreinheit (8) gemäß einem der Ansprüche 1 bis 13, wobei das hydraulische Bremssystem einen Hauptzylinder (1) aufweist, der über ein Trennventil (6) mit einer Radbremse (7) verbunden ist, sowie einen Bremsbetätiger, der ausgelegt ist, um in Ansprache auf ein elektrisches Signal von einem pedalbetätigten Übertrager wirksam zu werden, um die Förderung von Hydraulikflüssigkeit zu der genannten Radbremse zu steuern, wobei die Federsimulatoreinheit in dauernder Fluid-Verbindung mit einem Auslass des Hauptzylinders (1) steht, und wobei das genannte Trennventil (6) bei Normalbremsung geschlossen ist, um den Hauptzylinder (1) von der Radbremse (7) zu trennen, während bei Auftreten eines Fehlers das genannte Trennventil (6) öffnet, um eine Fluidverbindung zwischen dem Hauptzylinder (1) und der Radbremse (7) herzustellen.

15. Hydraulisches Bremssystem gemäß Anspruch 14, **dadurch gekennzeichnet, dass** das Trennventil (6) ein normalerweise offenes, elektrisch betätigtes Ventil aufweist.

## Revendications

1. Organe souple (8) à utiliser dans un système de freinage hydraulique du type à commande électronique, ledit organe souple (8) étant adapté pour absorber le fluide hydraulique expulsé d'un maître-cylindre (1) pendant le freinage normal et **caractérisé en ce qu'**il comprend en outre un premier piston (14) travaillant dans un alésage adapté de sorte que le fluide hydraulique provenant du maître-cylindre pénétrant dans l'alésage déplace le piston (14) le long de l'alésage dans une première direction par rapport à un premier et à un deuxième système de déviation, le premier système de déviation (19) étant adapté pour appliquer une première force de déviation au dit premier piston (14) pendant le freinage normal et ledit deuxième système de déviation étant adapté pour appliquer une deuxième force de déviation au dit premier piston (14) au cas où une défaillance serait détectée dans le système de freinage afin de ramener au moins une partie du fluide hydraulique au maitre-cylindre.

2. Organe souple selon la revendication 1, **caractérisé en ce que** le premier piston (14) est dévié par une force pratiquement égale à la première force de déviation en fonctionnement normal et **en ce que** la force de déviation appliquée au premier piston (14) est augmentée de la valeur de la deuxième force de déviation en cas de défaillance.

3. Organe souple selon la revendication 1 ou 2, **caractérisé en ce que**, en cas de défaillance, la combinaison de la première et de la deuxième force de déviation appliquée au premier piston (14) est au moins égale ou supérieure à la force maximale appliquée au premier piston (14) par le fluide provenant du maître-cylindre.

4. Organe souple selon la revendication 3, **caractérisé en ce que** le premier système de déviation (19) comprend un ressort de compression (19) agissant sur ledit premier piston (14) dans une direction substantiellement opposée à la direction dans laquelle la force du fluide provenant du maître-cylindre (1) agit sur le piston (14).

5. Organe souple selon l'une quelconque des revendications précédentes, **caractérisé en ce que** l'alésage comprend un alésage étagé constitué d'une première et d'une deuxième partie (10, 12), ladite première partie (10) étant adaptée pour loger ledit premier piston (14), et la deuxième partie (12) pour loger au moins une partie du deuxième système de déviation et étant d'un diamètre supérieur à la première partie.

6. Organe souple selon la revendication 5, **caractérisé en ce que** le deuxième système de déviation comprend un piston à gradin (15) dont la première partie (16) travaille dans ladite première partie (10) de l'alésage et dont la deuxième partie (17), de diamètre supérieur, travaille dans la deuxième partie (12) dudit alésage.

7. Organe souple selon la revendication 6, **caractérisé en ce que** le piston à gradin (15) est adapté pour se déplacer le long de la première partie de l'alésage en cas de défaillance pour agir de concert avec le premier piston (10) sous l'action de la deuxième force de déviation.

8. Organe souple selon la revendication 7, **caractérisé en ce que** la deuxième force de déviation est fournie par un deuxième ressort (20) dont la force est supérieure à la première force de déviation.

9. Organe souple selon la revendication 7 ou 8, **caractérisé en ce que**, en service normal, le piston à gradin (15) est dévié du premier piston dans la première partie de l'alésage sous l'action d'une troisième force de déviation.

10. Organe souple selon la revendication 9, **caractérisé en ce que** la troisième force de déviation comprend une pression hydraulique générée dans une cavité (21) définie par une partie du deuxième piston (15) et par la face étagée de l'alésage, qui agit pour déplacer le deuxième piston (15) en s'opposant à la force appliquée par la deuxième force de déviation.

11. Organe souple selon la revendication 9 ou 10, **caractérisé en ce que** la troisième force de déviation dépasse la deuxième force de déviation pendant le freinage normal et est réduite pratiquement à zéro en cas de défaillance.

12. Organe souple selon l'une quelconque des revendications 10 ou 11, **caractérisé en ce que** la troisième force de déviation est générée en introduisant du fluide hydraulique dans la cavité (21) pendant le freinage normal et **en ce que**, en cas de défaillance, le fluide hydraulique est soutiré par pompage ou de force sous l'action du deuxième ressort (20) déplaçant le piston.

13. Organe souple selon l'une quelconque des revendications 10 à 12, **caractérisé en ce qu'**une vanne (25) est fournie pour connecter alternativement la cavité à une source de pression et à un puisard sous pression.

14. Système de freinage hydraulique intégrant un organe souple (8) selon l'une quelconque des revendications 1 à 13, ledit système de freinage hydraulique comprenant un maître-cylindre (1) connecté via une vanne d'isolement (6) à un frein de roue (7), un actionneur de frein adapté pour fonctionner en réponse à un signal électrique émanant d'un capteur de pédale afin de contrôler à son tour la fourniture de fluide hydraulique au dit frein de roue, dans lequel l'organe souple est en communication fluidique permanente avec une sortie dudit maître-cylindre (1), et dans lequel la vanne d'isolement (6) est fermée pendant le freinage normal pour isoler le maître-cylindre (1) du frein de roue (7), et dans lequel, en cas de défaillance, la vanne d'isolement (6) est ouverte pour assurer une communication fluidique entre le maître-cylindre (1) et le frein de roué (7).

15. Système de freinage hydraulique selon la revendication 14, **caractérisé en ce que** la vanne d'isolement (6) comprend une électrovanne normalement ouverte.
